# EUROPEAN PATENT SPECIFICATION

(11) **EP 0 425 459 B1**
(45) Date of publication and mention of the grant of the patent: **24.11.1993**
(21) Application number: 90850319.6
(22) Date of filing: 26.09.1990
(51) Int. Cl.: A01L 7/02, A01L 1/00

(54) **Improvements in and relating to horseshoes**
Verbesserungen an Hufeisen
Améliorations relatives à des fers à cheval

(30) Priority: 26.09.1989 SE 8903150
(43) Date of publication of application: 02.05.1991
(73) Proprietor: Hadén, Erik, S-163 58 Spanga (SE)
(72) Inventor: Hadén, Erik, S-163 58 Spanga (SE)
(74) Representative: Andersson, Andy Rudy

(56) References cited:
- FR-A- 689 603
- GB-A- 197 231
- GB-A- 256 005
- US-A- 1 468 196
- US-A- 3 023 812
- US-A- 4 760 885

## Description

The present invention relates in principal to a horseshoe or hoof-fitting of the kind which includes a metallic part, or metallic shoe plate, which is intended to be fitted to the undersurface of a horse's hoof and which can be affixed to said hoof through the intermediary of a plurality of holes disposed in the vicinity of the periphery of said metallic part, wherein each of said holes is intended to accommodate a horseshoe-nail, and which further includes a ground-contacting, elastic or resilient member which can be detachably attached to the metallic part and which functions as a shock-absorbing cushion. The present invention more precisely relates to a hoof-fitting according to the preamble of claim 1.

### Known Technique

A hoof-fitting according to the preamble of claim 1 is known from US-A-1468196.

Another horseshoe of this principle construction is known, for instance, from US-A-4,645,008. The known horseshoe is particularly intended for racing horses and the metal part which abuts the horse's hoof is a conventional horseshoe which must be manufactured particularly for each individual hoof. This also applies to the metal plate which is screwed to the first metal part. A ground-contacting elastomeric member is then glued to the intermediate metal plate. Thus, the unit comprised of the metal part and the elastomeric member can be removably attached to the sole plate, with the aid of screws. A horse which is to be fitted with horseshoes of this kind must be taken to a blacksmith who has the necessary tools in his possession. The horseshoe itself is both complicated and expensive and the time taken to shoe a horse is quite considerable, as are also the costs. A substantially similar horseshoe is described and illustrated in US-A-4,760,885.

A further drawback with these known horseshoes, is, for instance, that snow and clay packs readily into the various of the composite horseshoe.

SE-A-28572 teaches another horseshoe or hoof-fitting, which comprises a conventional, open metal-part provided with a plate which covers the open part of said metal-part. This plate is secured by means of ridges and screws and functions to prevent snow and clay from fastening to the hoof. SE-A-24787 teaches a similar solution. None of these known horseshoes, or hoof fittings, however, include an elastic shock-absorbing member.

With a starting point from a horseshoe of the kind described in the introduction, an object of the present invention is to provide an improved horseshoe which can be manufactured much more cheaply than known horseshoes of this kind and which can be fitted to racing horses, working horses and riding horses, irrespective of the size of the horse concerned. Another object of the invention is to provide an improved horseshoe which can be fitted to a horse by a person who is not particularly skilled in this art and without the use of such complicated tools and equipment as that normally required.

These objects are achieved with a horseshoe, or hoof-fitting, of the aforesaid kind having the characterizing features set forth in the characterizing clause of Claim 1.

The inventive horseshoe can be manufactured readily in large series, in the form of a semi-fabrications. It has been found that three mutually different sizes of horseshoe will cover the hoof sizes of all known horses. The elastic wear member can also be replaced readily by an unskilled person.

Other features of the improved horseshoe and advantages afforded thereby are set forth in the dependent Claims and in the following description respectively. So that the invention will be more readily understood a description of an exemplifying embodiment thereof is made in the following with reference to the accompanying drawings, in which
Figure 1 is a view from above of the metallic part of the inventive horseshoe;
Figure 2 is a side view of a composite horseshoe comprising a metallic part and shock-absorbing member;
Figure 3 is a view from above of the elastic shock-absorbing member forming part of the horseshoe; and
Figure 4 is a sectional view taken on the line IV-IV in Figure 1.

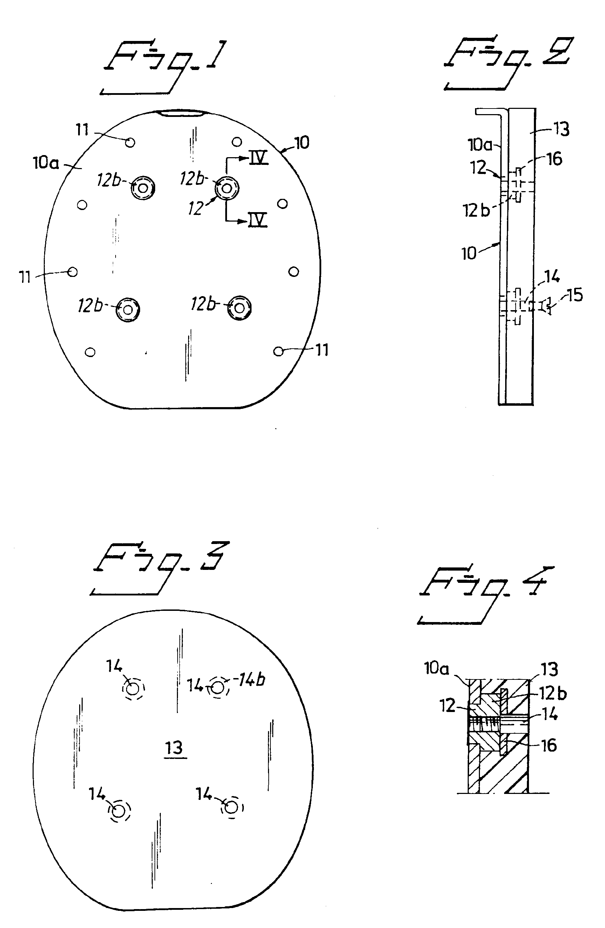

The inventive horseshoe, or hoot-fitting, includes a first plate-like part 10 which is preferably made of metallic material, such as duraluminium, for instance, and which is intended to substantially cover a horse,s hoof (not shown) and which conforms essentially to the outer shape of the hoof. The metallic horseshoe part 10 is conventionally provided with nail holes 11 which are mutually spaced around said part 10 in the vicinity of its periphery. Each of the nail holes 11 is intended to accommodate a horseshoe-nail (not shown) by means of which the metallic part 10 is affixed to the horse's hoof, in a conventional manner. The horseshoe part 10 is also provided with a number of first through-passing holes, for instance four holes, which are evenly spaced and located inwardly of the nail holes 11. A nut-like device 12 is inserted through each of these inwardly located first through-passing holes and there fixated, for instance with the aid of rivets. Each of these nut-like devices has a central opening which extends through said device and which is provided with an internal screwthread. One end of respective nut-like devices, riveted to said metallic part 10, which faces inwardly towards the horse's hoof is essentially flush, or essentially in the plane of with the corresponding surface 10a of said metallic part 10 (Figures 2, 4). The other end of respective nut-like devices 12, on the other hand, projects from a corresponding surface of the metallic part 10 and forms an outwardly projecting part 12b whose diameter is greater than the diameter of the hole through which each of said devices 12 is inserted. Consequently, the underside of these outwardly projecting parts rests on the upper surface of the metallic part 10 of the horseshoe (Figure 4).

The metallic part 10 may have a thickness of 2-8 mm, preferably about 4 mm, and can be produced in large series, with the aid of metal punching techniques, and in a few, mutually different sizes, so as to enable the shape of the metallic part to be adapted to the hooves of both large and small horses. The metallic part is intended to coact detachably with an elastic or resilient shock-absorbing member, referenced 13 in the drawing (Figures 2 and 3). The resilient shock-absorbing member is preferably of homogenous construction and will also preferably be made of a rubber or a plastics material, or a combination of these mate rials. As will be seen from the drawing, the shock-absorbing member has a shape which is complementary to the shape of the metallic part 10, although the thickness of said shock-absorbing member is greater, or significantly greater than the thickness of said metallic part. Consequently, the outer surfaces of the elastic shock-absorbing member 13 lie flush with the outer surfaces of the metallic part 10. A number of second through-passing holes 14 are pre-drilled through the shock-absorbing member 13. These second through-passing holes 14 are normally four in number and are located further inwards from the periphery than the horseshoe-nail holes in the metallic part 10, with respect to space. These pre-drilled second through-passing holes 14 are so dimensioned and positioned, that each of the exit openings 14b on the side which is intended to abut the metallic part forms a complementary recess 14b which is adapted to receive a corresponding, outwardly projecting part 12b of a respective nut device 12. The depth of penetration of the outwardly projecting parts 12b can be varied selectively in dependence on the height of said parts 12b and the thickness of the shock-absorbing member 13.

It will be seen that because an elastic or resilient shock-absorbing member, produced in the aforesaid manner, is dimensioned to fit a prepared metallic part 10 of corresponding size, the shock-absorbing member can be fitted to the metallic part 10 in a matter of seconds. When the metallic part 10 and the shock-absorbing member 13 are fitted together, a screw 15 is inserted into each of the second through-passing holes 14 and said parts screwed together. In accordance with the illustrated embodiment, a plate 16 is embedded in the resilient shock-absorbing member 13, and the screws 15 can be moved into respective holes 14 until the ends of the screws abut a respective plate 16 by screwing into the internal screwthreads of respective nut-like devices 12.

It is evident that the horseshoe, or hoof-fitting, comprising said metallic part 10 and said shock-absorbing member 13 is a considerable improvement on known horseshoes of this kind. A number of advantages gained with the inventive horseshoe have been mentioned in the aforegoing. Another, obvious advantage lies in the fact that the outwardly protruding parts 12b of the nut-like devices 12 are embedded in the shock-absorbing member 13. When the horseshoe is worn by a horse and comes into contact with the ground for the first time, the horseshoe will be subjected to an essentially rearwardly acting force component, which is transmitted to said outwardly projecting parts 12b and therewith prevent the shock-absorbing member 13 from being released unintentionally from the metallic part 10.

If none of the prefabricated horseshoes fits the hoof of a horse to be shoed, the mutually complementary parts 10, 13 are selected in a size which is larger than the hoof of the horse concerned. The dimensions of the metallic part 10 are then adjusted with the aid of conventional metal cutters, and the shock-absorbing member 13 is then brought to a shape commensurate with the thus worked metallic part 10, for instance with the aid of a sharp knife. These two generally available tools are all that are required, in addition to the horseshoe-nails required to affix the metallic part 10 to the horse,s hoof, in order to attach the improved, inventive horseshoe or hoof-fitting.

## Claims

1. A hoof-fitting comprising a metallic part (10) with a hoof facing surface (10a) and an opposite surface and intended to be fitted to the horse's hoof and which is secured to said hoof through the intermediary of a plurality of nail holes (11) disposed around and in the proximity of the periphery of said metallic part (10), each of said nail holes (11) receiving a horseshoe-nail, said metallic part (10) has a number of first through-passing holes provided with an internal screwthread, further comprising a resilient shock-absorbing member (13) with second through-passing holes (14) therein, said shock-absorbing member (13) is detachably, and preventively from relative displacement secured to said substantially identically configured metallic part (10) with screw means (15) inserted from the side opposite the hoof in said second through-passing holes (14) and screwed into said screwthread, **characterized** in that said metallic part (10) and said resilient shock-absorbing member (13) are configured from sheets and substantially cover a horse's hoof and that said first through-passing holes are evenly spaced and located inwardly of said nail holes (11), each of said first through-passing holes having inserted and fixed therein a nut-like means (12) with a central opening extending therethrough provided with said screwthread, one end of said nut-like means (12) being essentially flush with said hoof facing surface (10a), the other end projecting from said opposite surface forming a projecting part (12b), each of said projecting parts (12b) of said nut-like means (12) received in a complementarily formed recess (14b) forming a part of said second through-passig holes (14).

2. A hoof-fitting according to Claim 1, **characterized** in that a plate (16) is so embedded in the shock-absorbing member (13) as to concentrically surround each second through-passing hole (14) therein and to form an abutment surface for the screw means (15).

3. A hoof-fitting according to Claim 1 or 2, **characterized** in that the plate-like shock-absorbing member (13) is significantly thicker than the metallic part (10).

## Patentansprüche

1. Hufbeschlag mit einem metallischen Teil (10) mit einer dem Huf zugewandten Fläche (10a) und einer gegenüberliegenden Fläche, der bestimmt ist zur Anbringung am Pferdehuf und daran mittels einer Mehrzahl von Nagellöchern (11) befestigt ist, die rings um das metallische Teil (10) und in der Nähe seiner Peripherie angeordnet sind, wobei jedes Nagelloch (11) einen Hufnagel aufnimmt und das metallische Teil (10) eine Anzahl erster Durchgangslöcher mit einem inneren Schraubengewinde aufweist, des weiteren mit einem elastischen Stoßdämpferglied (13) mit darin befindlichen zweiten Durchgangslöchern (14), wobei das Stoßdämpferglied (13) abnehmbar und eine Relativverschiebung verhütend an dem im wesentlichen identisch geformten metallischen Teil (10) gesichert ist mit Schrauborganen (15), die von der dem Huf entgegengesetzten Seite in die zweiten Durchgangsbohrungen (14) eingesetzt und in das genannte Schraubengewinde eingeschraubt sind, ***dadurch gekenn******zeichnet****,* daß das genannte metallische Teil (10) und das genannte elastische Stoßdämpferglied (13) aus Platten geformt sind und den Pferdehuf im wesentlichen bedecken, daß die genannten ersten Durchgangslöcher gleichmäßig beabstandet und einwärts der genannten Nagellöcher (11) angeordnet sind, daß jedes der ersten Durchgangslöcher darin eingesetzt und befestigt ein mutterartiges Glied (12) aufweist mit einer zentralen, sich hindurch erstreckenden und mit dem Schraubengewinde versehenen Öffnung, daß ein Ende des mutterartigen Gliedes (12) mit der genannten zum Huf weisenden Fläche (10a) im wesentlichen bündig ist und das andere, von der genannten gegenüberliegenden Fläche vorspringende Ende ein auskragendes Teil (12b) ausbildet, und daß jedes der auskragenden Teile (12b) der mutterartigen Glieder (12) in eine komplementär geformte Ausnehmung (14b) hineinragt, die einen Teil der zweiten Durchgangslöcher (14) bildet.

2. Hufbeschlag nach Anspruch 1, ***dadurch gekenn******zeichnet****,* daß eine Scheibe (16) derart in das Stoßdämpferglied (13) eingebettet ist, daß sie jedes der zweiten Durchgangslöcher (14) konzentrisch umgibt und eine Widerlagerfläche für das Schrauborgan (15) ausbildet.

3. Hufbeschlag nach Anspruch 1 oder 2, ***dadurch ge******kennzeichnet****,* daß das plattenartige Stoßdämpferglied (13) deutlich dicker ist als der metallische Teil (10).

## Revendications

1. Un fer à cheval comprenant une partie métallique (10) avec une surface (10a) faisant face au sabot et une surface opposée, et prévu pour être installé sur le sabot d'un cheval, et qui est fixé sur le sabot au moyen d'un ensemble de trous de passage de clous (11) disposés à la périphérie et à proximité de la périphérie de la partie métallique (10), chacun des trous de passage de clous (11) recevant un clou de fer à cheval, la partie métallique (10) comportant un certain nombre de premiers trous traversants qui comportent un filetage intérieur, ce fer à cheval comprenant en outre un élément amortisseur élastique (13) dans lequel sont formés des seconds trous traversants (14), cet élément amortisseur (13) étant fixé de façon amovible, et de façon à empêcher un déplacement relatif, à la partie métallique (10) de configuration pratiquement identique, à l'aide de vis (15) introduites dans les seconds trous traversants (14), à partir du côté qui fait face au sabot, et étant vissées dans le filetage précité, **caractérisé** en ce que la partie métallique (10) et l'élément amortisseur (13) sont découpés dans des plaques et couvrent pratiquement un sabot de cheval, et en ce que les premiers trous traversants sont uniformément espacés et sont placés du côté intérieur des trous de passage de clous (11), un élément semblable à un écrou (12) étant inséré et fixé dans chacun des premiers trous traversants, et une ouverture centrale qui traverse cet élément comportant le filetage précité, une extrémité de l'élément semblable à un écrou (12) affleurant pratiquement la surface (10a) qui fait face au sabot, tandis que l'autre extrémité fait saillie à partir de la surface opposée en formant une partie en saillie (12b), chacune des parties en saillie (12b) des éléments semblables à des écrous étant logée dans une cavité formée de façon complémentaire (14b) qui fait partie des seconds trous traversants (14).

2. Un fer à cheval selon la revendication 1, **caractérisé** en ce qu'une plaquette (16) est noyée dans l'élément amortisseur (13) de façon à entourer d'une manière concentrique chaque second trou traversant (14) se trouvant dans cet élément, de façon à former une surface de butée pour la vis (15).

3. Un fer à cheval selon la revendication 1 ou 2, **caractérisé** en ce l'élément amortisseur en forme de plaque (13) est notablement plus épais que la partie métallique (10).
